# FASCICULE DE BREVET EUROPEEN

(11) **EP 2 277 417 B1**
(45) Date de publication et mention de la délivrance du brevet: **21.05.2014**
(21) Numéro de dépôt: 10305794.9
(22) Date de dépôt: 19.07.2010
(51) Int. Cl.: A47J 27/09

(54) **Organe d'échappement de vapeur pour appareil de cuisson et appareil de cuisson équipé d'un tel organe**
Dampfauslassorgan für Kochgerät, und mit einem solchen Organ ausgestattetes Kochgerät
Steam release member for a cooking appliance and cooking appliance equipped with such a member

(30) Priorité: 22.07.2009 FR 0955131
(43) Date de publication de la demande: 26.01.2011
(73) Titulaire: SEB S.A., 69130 Écully (FR)
(72) Inventeur: Cohade, Guillaume, 21000 Dijon (FR); Chameroy, Eric, 21260 Véronnes (FR)
(74) Mandataire: Weber, Jean-François

(56) Documents cités:
- CH-A- 391 233
- GB-A- 645 179

## Description

La présente invention se rapporte au domaine technique général des appareils de cuisson d'aliments, notamment à caractère domestique, et en particulier aux appareils de cuisson destinés à former une enceinte de cuisson étanche, au sein de laquelle sont cuits des aliments sous pression de vapeur.

La présente invention concerne plus particulièrement un organe d'échappement de vapeur conçu pour équiper une enceinte de cuisson d'aliments et comprenant un premier canal d'évacuation de la vapeur susceptible d'être produite dans l'enceinte de cuisson, ledit premier canal étant conformé pour que ladite vapeur s'échappe par le premier canal selon une première direction.

La présente invention concerne également un appareil de cuisson d'aliments comprenant :
- un organe d'échappement de vapeur conçu pour équiper une enceinte de cuisson d'aliments et comprenant un premier canal d'évacuation de la vapeur susceptible d'être produite dans l'enceinte de cuisson, ledit premier canal étant conformé pour que ladite vapeur s'échappe par le premier canal selon une première direction,
- une cuve et un couvercle destiné à être rapporté sur la cuve pour former ladite enceinte de cuisson,
ledit organe d'échappement étant monté sur le couvercle.

Les appareils de cuisson sous pression, en particulier à usage domestique, du genre autocuiseur, sont bien connus dans l'art antérieur. De tels appareils comprennent généralement une cuve et un couvercle destiné à être rapporté sur la cuve pour former une enceinte de cuisson hermétique au sein de laquelle sont placés les aliments à cuire. Cette enceinte peut ainsi atteindre des pressions et températures élevées lorsque l'appareil est soumis à l'influence d'une source de chauffe.

Ces appareils connus sont en outre généralement pourvus d'une soupape de régulation coopérant avec un orifice de fuite ménagé dans le couvercle pour obturer ou libérer ledit orifice en fonction de la pression régnant dans l'enceinte, en vue de maintenir ladite pression à un niveau prédéterminé de consigne habituellement désigné par l'appellation « *pression de fonctionnement* ».

Afin de guider correctement la vapeur vers l'extérieur de l'enceinte, la soupape de régulation de ces appareils connus est montée par exemple dans une chambre qui coiffe de manière étanche l'orifice de fuite, ladite chambre étant elle-même pourvue d'un orifice de libération de vapeur auquel est abouché un conduit d'évacuation qui canalise la vapeur vers l'extérieur.

Une telle architecture de soupape de régulation est parfaitement classique et donne généralement satisfaction.

Elle n'en présente pas moins certains inconvénients, qui se manifestent en particulier pendant la cuisson.

L'un de ces inconvénients réside ainsi dans le fait que le canal d'évacuation de vapeur (formé par la chambre et le conduit qui la prolonge) participe, parce qu'il est froid, à la condensation de la vapeur à évacuer avant même que cette dernière ne soit conduite jusqu'à la sortie du conduit.

Chambre et conduit peuvent alors se gorger d'eau chaude, laquelle est projetée de temps en temps hors du conduit, ce qui peut entraîner des risques de dégradations d'un dispositif électrique ou électronique à proximité, voire même, dans les cas plus graves, des brûlures légères pour un utilisateur dont les mains ou le visage se trouveraient par exemple sur la trajectoire des projections.

De plus, la présence d'une quantité d'eau significative dans la chambre de la soupape entraîne des bruits de clapotis pendant la cuisson qui s'avèrent relativement désagréables et anxiogènes pour l'utilisateur, ce dernier pouvant les interpréter comme des signes d'un mauvais fonctionnement voire même d'un fonctionnement non sécuritaire de son autocuiseur.

Ce problème de crachotement de la soupape est particulièrement présent lorsque la cuisson s'effectue à feu réduit, de sorte que le débit du jet de vapeur s'échappant par la chambre et le conduit est faible. En effet, quand le jet de vapeur est important (par exemple lors de la décompression en fin de cuisson ou au contraire en début de cuisson, avant que l'utilisateur ne réduise la puissance de la source de chauffe), la vapeur est poussée rapidement en dehors de la chambre et du conduit, de sorte que la condensation est limitée et que l'eau éventuellement produite est instantanément chassée hors du conduit par le flux de vapeur.

En revanche, pendant toute la phase de cuisson à pression de fonctionnement, qui se fait à feu réduit, le flux de vapeur s'échappant par la chambre et le conduit est faible, de sorte que la condensation est maximale, chambre et conduit se remplissant alors d'eau. La vapeur, dont le flux est faible, ne produit pas une force suffisante pour surmonter le poids des gouttes d'eau, lesquelles stagnent alors dans la chambre et le conduit et n'en sortent que par instants, sous la forme de projections brûlantes.

Le document CH-391233 A décrit le préambule de la revendication 1.

Les objets assignés à l'invention visent en conséquence à proposer un nouvel organe d'échappement de vapeur, conçu pour équiper un ensemble de cuisson d'aliments, portant remède aux différents inconvénients de l'art antérieur énumérés précédemment et qui, tout en étant de conception particulièrement simple et économique, permet de réduire de façon significative les projections d'eau intempestives.

Un autre objet de l'invention vise à proposer un nouvel organe d'échappement de vapeur qui limite les projections d'eau sans perturber sensiblement le flux de vapeur.

Un autre objet de l'invention vise à proposer un nouvel organe d'échappement de vapeur dont la conception est particulièrement simple et immédiatement adaptable à tout type d'autocuiseur.

Un autre objet de l'invention vise à proposer un nouvel organe d'échappement de vapeur conçu pour équiper une enceinte de cuisson d'aliments de construction extrêmement simple, sûre et fiable.

Un autre objet de l'invention vise à proposer un nouvel organe d'échappement de vapeur qui permet de faire disparaître de manière extrêmement efficace, simple et sécurisée les condensats de vapeur susceptibles de se former en son sein.

Un autre objet de l'invention vise à proposer un nouvel organe d'échappement de vapeur qui permet d'évacuer la vapeur selon une trajectoire identifiable par l'utilisateur.

Un autre objet de l'invention vise à proposer un nouvel appareil de cuisson d'aliments qui, tout en étant d'une conception et d'un coût de revient sensiblement identiques à ceux d'un appareil de l'art antérieur, permet de limiter significativement les projections d'eau.

Un autre objet de l'invention vise à proposer un nouvel appareil de cuisson d'aliments qui permet d'éliminer les condensats de vapeur de façon extrêmement simple, efficace, sûre et bon marché.

Les objets assignés à l'invention sont atteints à l'aide d'un organe d'échappement de vapeur conçu pour équiper une enceinte de cuisson d'aliments et comprenant un premier canal d'évacuation de la vapeur susceptible d'être produite dans l'enceinte de cuisson, ledit premier canal étant conformé pour que ladite vapeur s'échappe par le premier canal selon une première direction, **caractérisé en ce qu**'il comprend un deuxième canal d'évacuation d'au moins une fraction des condensats susceptibles de se former au sein dudit premier canal par condensation de la vapeur dans ledit premier canal, ledit deuxième canal étant connecté au premier canal pour évacuer lesdits condensats selon une deuxième direction sensiblement différente de la première direction.

Les objets assignés à l'invention sont également atteints à l'aide d'un appareil de cuisson d'aliments comprenant d'une part un organe d'échappement conforme à l'invention et, d'autre part, une cuve et un couvercle destiné à être rapporté sur la cuve pour former ladite enceinte de cuisson, ledit organe d'échappement étant monté sur le couvercle.

D'autres particularités et avantages de l'invention apparaîtront et ressortiront plus en détails à la lecture de la description faite ci-après, en référence aux dessins, annexés donnés à titre purement illustratif et non limitatif, dans lesquels :
- La figure 1 illustre, selon une vue schématique en coupe, un organe d'échappement de vapeur équipant le couvercle d'un appareil de cuisson d'aliments sous pression, ledit organe comprenant une soupape qui se trouve dans une position étanche.
- La figure 2 illustre, selon une vue schématique en coupe, l'organe d'échappement de la figure 1, la soupape se trouvant cette fois dans une position de fuite de vapeur.
- La figure 3 illustre, selon une vue schématique en coupe, un détail agrandi de l'organe d'échappement des figures 1 et 2.

L'invention concerne un organe d'échappement de vapeur 1 conçu pour équiper une enceinte de cuisson d'aliments en vue d'évacuer, de préférence pour réguler la pression régnant dans l'enceinte de cuisson, la vapeur susceptible d'être contenue dans cette dernière. L'enceinte de cuisson constitue classiquement un volume fermé, et de préférence étanche, destiné à accueillir des aliments à cuire. L'enceinte de cuisson est avantageusement destinée à être soumise à l'action d'une source de chauffe, soit externe (par exemple : plaque de cuisson) soit interne (par exemple : résistance électrique embarquée) en vue de cuire les aliments, de préférence en présence d'un milieu liquide, ce qui génère de la vapeur d'eau et entraîne une montée en pression de l'intérieur de l'enceinte si cette dernière est suffisamment hermétique.

De préférence, l'enceinte de cuisson est formée par l'association d'une cuve (non représentée) et d'un couvercle 2 rapporté sur la cuve en question.

L'invention concerne d'ailleurs en tant que tel un appareil de cuisson d'aliments comprenant d'une part un organe d'échappement 1 conforme à la description qui va suivre et d'autre part une cuve et un couvercle 2 destiné à être rapporté sur la cuve pour former une enceinte de cuisson, l'organe d'échappement 1 étant monté sur le couvercle 2 comme illustré aux figures.

De préférence, l'appareil de cuisson en question constitue un appareil de cuisson sous pression, et de façon encore plus préférentielle un autocuiseur domestique permettant d'assurer la cuisson de différents aliments, sous pression de vapeur.

Pour des raisons de simplicité de description, il sera exclusivement fait référence dans ce qui suit, en relation avec les dessins annexés, à un organe d'échappement 1 destiné à équiper le couvercle d'un autocuiseur. Il est cependant tout à fait envisageable que l'organe d'échappement 1 conforme à l'invention équipe un appareil de cuisson autre qu'un autocuiseur, et en particulier un appareil de cuisson qui n'est pas un appareil de cuisson sous pression.

Comme cela ressortira plus nettement de la description qui suit, l'invention s'avère cependant extrêmement avantageuse lorsqu'elle est appliquée à un appareil de cuisson sous pression du genre autocuiseur.

Un tel appareil de cuisson sous pression comporte classiquement une cuve et un couvercle réalisé en un matériau métallique présentant une bonne résistance mécanique, ainsi que d'une part des moyens permettant de verrouiller le couvercle sur la cuve, et d'autre part des moyens permettant d'assurer l'interface étanche entre le couvercle et la cuve, de manière à obtenir ainsi une enceinte de cuisson susceptible de subir une augmentation significative de pression interne.

Comme illustré aux figures, l'organe d'échappement de vapeur 1 conforme à l'invention comprend un premier canal 3 d'évacuation de la vapeur V susceptible d'être produite dans l'enceinte de cuisson, ledit premier canal 3 étant conformé pour que ladite vapeur V s'échappe par le premier canal 3 selon une première direction D1. Le terme « *direction* » doit être compris ici et dans ce qui suit comme désignant non seulement la ligne moyenne suivant laquelle la vapeur V se meut dans le premier canal 3, mais également le sens de déplacement de la vapeur V au sein du premier canal 3. En d'autres termes, la direction D1 matérialise la trajectoire de la vapeur V. Ainsi, le premier canal 3 permet de guider la vapeur V selon une trajectoire prédéterminée, matérialisée par la première direction D1. Afin d'évacuer la vapeur V, le premier canal 3 communique avec l'extérieur, de sorte que la vapeur V évacuée par le premier canal 3 ne fait que transiter par ce dernier et finit par s'échapper hors dudit premier canal 3, vers l'extérieur de l'enceinte. Le premier canal 3 est donc ouvert sur l'extérieur, c'est-à-dire qu'il est conformé pour que la vapeur V s'échappe par le premier canal 3 hors de ce dernier, le premier canal 3 s'étendant ainsi entre une section amont communiquant avec l'intérieur de l'enceinte et une section aval ouverte sur l'extérieur.

Selon l'invention, l'organe d'échappement de vapeur 1 comprend en outre un deuxième canal d'évacuation 4 d'au moins une fraction des condensats C susceptibles de se former au sein du premier canal 3 par condensation de la vapeur V dans le premier canal 3, ledit deuxième canal 4 étant connecté au premier canal 3 pour évacuer lesdits condensats C selon une deuxième direction D2 sensiblement différente de la première direction D1. En d'autres termes, le deuxième canal 4 est branché au premier canal 3, de manière à établir une communication fluidique entre lesdits premier et deuxième canal 3, 4, pour permettre à l'eau produite par la condensation de la vapeur V dans le premier conduit 3 d'être collecté et guidé par le deuxième canal 4 selon une direction D2 qui est sensiblement distincte, et de préférence sensiblement opposée, à la première direction D1 selon laquelle la vapeur V s'échappe par le premier canal 3. Afin d'évacuer au moins une partie des condensats C, le deuxième canal 4 communique avantageusement avec l'extérieur, de sorte que les condensats C évacués par le deuxième canal 4 ne font que transiter par ce dernier et finissent par s'échapper hors dudit deuxième canal 4, vers l'extérieur de l'enceinte. Le deuxième canal 4 est donc ouvert sur l'extérieur, c'est-à-dire qu'il est conformé pour qu'au moins une fraction des condensats C s'échappe par le deuxième canal 4 hors de ce dernier, le deuxième canal 4 s'étendant ainsi entre une section amont communiquant avec le premier canal 3 et une section aval ouverte sur l'extérieur. Les condensats C ne sont donc pas stockés dans le deuxième canal 4 mais expulsés par et hors de ce dernier.

Ainsi, l'invention repose sur le principe général de fonctionnement suivant :
- de la vapeur V produite dans l'enceinte de cuisson emprunte le premier canal 3 pour s'échapper hors de l'enceinte de cuisson (et du premier canal 3) selon la première direction D1 ;
- une partie de la vapeur V qui s'échappe par le premier canal 3 se condense au contact des parois de ce dernier, ce qui forme des condensats C généralement constitués par de l'eau liquide ;
- les condensats C sont récupérés, de préférence par gravité, dans le deuxième canal 4 qui les évacue (hors du deuxième canal 4 et de préférence hors de l'organe d'échappement) selon la deuxième direction D2.

De cette façon, la vapeur d'eau V et l'eau liquide sont sensiblement séparées, ce qui limite la survenance de phénomènes indésirables de crachotement et de projection d'eau liquide brûlante par le premier canal 3.

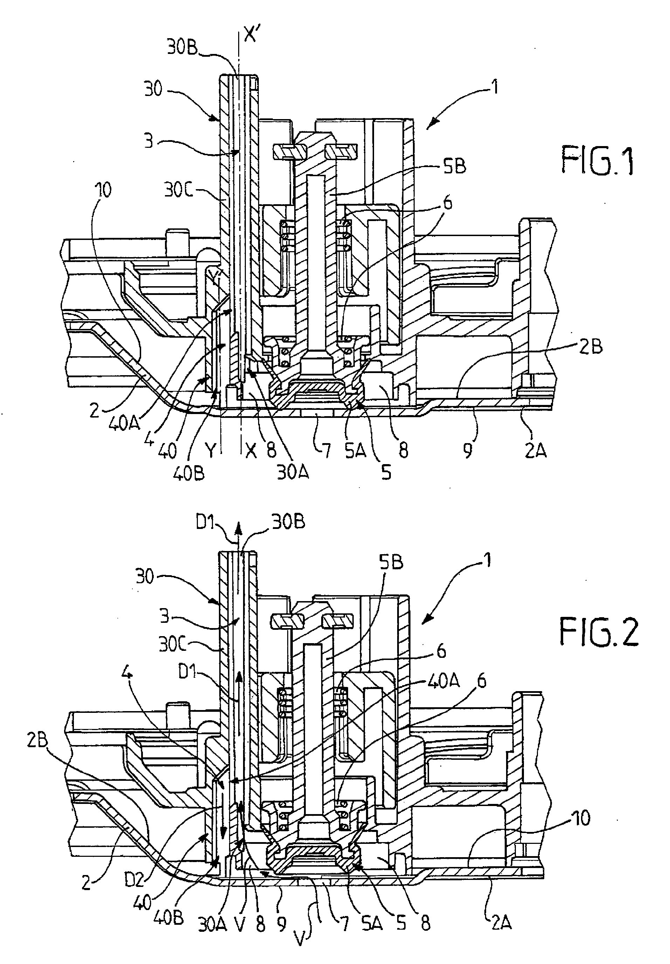

Avantageusement, le premier canal 3 est orienté de façon à canaliser la vapeur V selon une trajectoire sensiblement ascendante, c'est-à-dire que la vapeur V est guidée par le premier canal 3 pour se déplacer vers le haut à partir de l'enceinte de cuisson, lorsque cette dernière se trouve dans sa position fonctionnelle normale (par exemple lorsqu'elle repose sur une plaque de cuisson). Ainsi, le premier canal 3 s'étend de préférence selon une composante majoritairement verticale, de manière à faciliter l'évacuation de la vapeur V. Dans l'exemple des figures 1 et 2, le premier canal 3 se présente ainsi sous la forme d'un tube sensiblement vertical, qui s'étend localement de façon sensiblement perpendiculaire au couvercle 2 comme illustré. Il est cependant tout à fait envisageable que le premier canal 3 s'étende de façon sensiblement oblique relativement à la direction verticale. Une telle orientation oblique du premier canal 3 s'avère d'ailleurs avantageuse en ce qu'elle facilite l'écoulement des condensats C dans le deuxième canal 4 par gravité.

Avantageusement, le deuxième canal 4 est quant à lui orienté de façon à canaliser les condensats C susceptibles de se former par condensation de la vapeur V dans le premier canal 3 selon une trajectoire sensiblement descendante, c'est-à-dire de préférence de sens sensiblement opposée à celui de la trajectoire ascendante de la vapeur V.

Ainsi, dans l'exemple illustré aux figures, les première et deuxième directions D1, D2 sont sensiblement opposées, la vapeur V s'échappant dans un sens et les condensats C dans l'autre. Il est cependant tout à fait envisageable que la différence entre les première et deuxième directions D1, D2 soit moins marquée, étant entendu qu'il est cependant particulièrement avantageux que le premier canal 3 s'étende de façon majoritairement ascendante, tandis que le deuxième canal 4 s'étend de façon majoritairement descendante.

Dans l'exemple illustré aux figures, le premier canal 3 comprend au moins un premier conduit 30 qui s'étend entre d'une part une ouverture d'admission 30A de vapeur par laquelle la vapeur V en provenance de l'enceinte de cuisson pénètre dans le premier conduit 3, et d'autre part une ouverture d'éjection 30B de vapeur par laquelle la vapeur V s'échappe hors du premier conduit 30.

De préférence, comme illustré aux figures, le premier conduit 30 se présente sous la forme d'un tube ouvert à ses deux extrémités, lesquelles correspondent respectivement à l'ouverture d'admission 30A et à l'ouverture d'éjection 30B, ledit tube comprenant une paroi latérale 30C reliant les deux extrémités en question et délimitant le canal de passage de la vapeur V. Dans l'exemple illustré aux figures, le tube formant le premier conduit 30 s'étend ainsi selon un axe sensiblement vertical X-X' qui est localement perpendiculaire au couvercle 2.

Avantageusement, le deuxième canal 4 comprend quant à lui au moins un deuxième conduit 40 qui s'étend entre d'une part une ouverture d'admission de condensats 40A par laquelle les condensats C en provenance du premier conduit 30 pénètre, de préférence sous l'effet de la gravité, dans le deuxième conduit 40, et d'autre part une ouverture d'évacuation 40B des condensats par laquelle lesdits condensats C s'échappent hors du deuxième conduit 40, de préférence sous l'effet de la gravité. Dans l'exemple illustré aux figures, le deuxième conduit 40 s'étend selon un axe d'extension principale Y-Y' sensiblement vertical, qui est de préférence parallèle à l'axe d'extension principale X-X' du premier conduit 30. Ainsi, les condensats C se déplacent dans le deuxième conduit 40, selon une trajectoire sensiblement parallèle mais de sens opposé à la trajectoire de la vapeur dans le premier conduit 30.

Avantageusement, l'ouverture d'admission de condensats 40A est connectée au premier conduit 30 entre les ouvertures d'admission 30A et d'éjection 30B de vapeur. De préférence, comme illustré aux figures, l'ouverture d'admission 40A est connectée à la paroi latérale 30C du premier conduit.

De cette façon, une fraction significative de l'eau qui se forme, par condensation de la vapeur, sur la face interne de la paroi latérale 30C du premier conduit 30 va pouvoir atteindre l'ouverture d'admission de condensats 40A par ruissellement gravitaire le long de la paroi latérale 30C et être ainsi évacué à l'extérieur de l'appareil de cuisson via le deuxième conduit 40.

Avantageusement, l'ouverture d'admission de condensats 40A est positionnée relativement au premier conduit 30 de façon à ne pas être trop éloigné de l'ouverture d'admission 30A de vapeur, en vue d'évacuer le maximum d'eau condensée, sans toutefois être trop proche de l'ouverture 30A d'admission de vapeur, afin de conserver une longueur du premier conduit 30 suffisante pour impartir une direction définitive au jet de vapeur. De cette façon, la vapeur V, qui doit être évacuée vers le haut en sortie du premier conduit 30, ne peut sensiblement pas emprunter le même chemin que les condensats C. De préférence, la distance séparant l'ouverture d'admission de condensats 40A de l'ouverture d'admission de vapeur 30A est sensiblement inférieure à la distance séparant l'ouverture d'admission de condensats 40A de l'ouverture d'éjection de vapeur 30B. En effet, c'est la longueur importante du premier conduit 30 qui génère une quantité importante de condensats C; il convient donc de placer l'ouverture d'admission de condensats 40A le plus bas possible, pour collecter et évacuer une quantité maximale de condensats C. Le deuxième conduit 40 est ainsi branché au premier conduit 30 suffisamment proche de l'ouverture d'admission 30A de vapeur pour pouvoir évacuer un maximum de liquide, mais suffisamment éloigné de l'ouverture d'admission 30A de vapeur pour conserver une longueur de premier canal 3 suffisante pour conférer une trajectoire prédéterminée, selon la direction D1, au jet de vapeur s'échappant par le premier conduit 30.

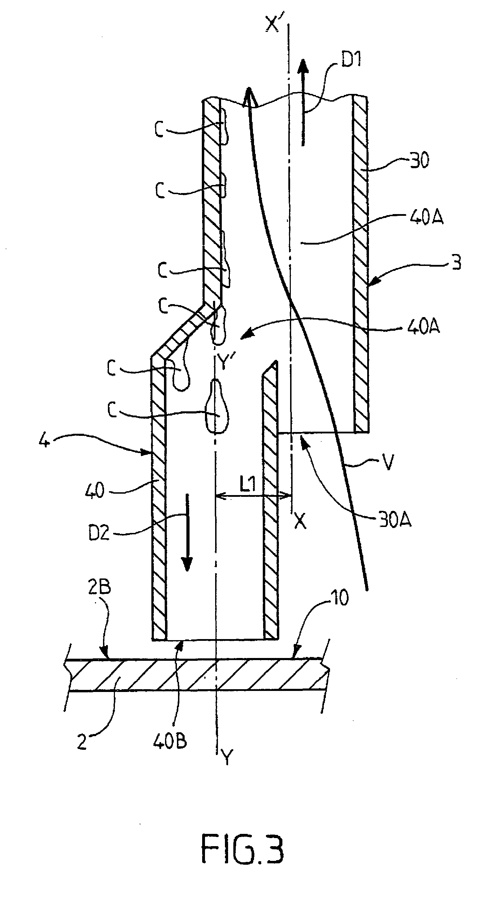

Avantageusement, et comme illustré à la figure 3, le premier et le deuxième canal 3, 4 sont agencés de façon qu'au moins la portion du premier canal 3 située immédiatement à l'amont, par rapport à la première direction D1, de l'ouverture d'admission de condensats 40A, surplombe, au moins en partie, ladite ouverture d'admission de condensats 40A. En d'autres termes, comme illustré à la figure 3, l'ouverture d'admission de condensats 40A définit une section d'ouverture qui est au moins partiellement contenue dans le premier canal 3. Par exemple, comme illustré à la figure 3, les axes moyens d'extension des premier et deuxième canaux 3, 4, matérialisés par respectivement les axes X-X' et Y-Y', sont décalés, de préférence très légèrement, d'une distance L1 choisie pour que les sections transversales des canaux 3, 4 se recouvrent au moins partiellement. Grâce à cette caractéristique, le risque que la vapeur V emprunte de façon intempestive l'ouverture d'admission des condensats 40A puis le deuxième canal 4 est minimisé. En effet, la section d'ouverture définie par l'ouverture d'admission des condensats 40A ne se trouve sensiblement pas sur la trajectoire de la vapeur V. Cette caractéristique permet en outre d'améliorer la collecte, par le deuxième canal 4, des condensats C en provenance du premier canal 3.

Avantageusement, comme illustré aux figures, l'organe d'échappement 1 comprend une soupape 5 sensible à la pression régnant dans l'enceinte de cuisson, ladite soupape 5 étant mobile entre :
- d'une part une position étanche (illustrée dans la figure 1) dans laquelle elle empêche sensiblement la vapeur de sortir par le premier canal 3 tant que la pression dans l'enceinte n'excède pas un niveau prédéterminé,
- et d'autre part au moins une position de fuite (illustrée à la figure 2) dans laquelle la soupape 5 autorise un échappement de vapeur par le premier canal 3.

Avantageusement, la soupape 5 est conçue pour réguler la pression régnant dans l'enceinte de cuisson à un niveau de consigne (généralement appelée « *pression de fonctionnement* » ou « *pression de cuisson* ») correspondant audit niveau prédéterminé. Dans ce cas, la soupape 5 constitue une soupape de régulation de pression. L'emploi d'une telle soupape de régulation de pression est bien connu en tant que tel dans le secteur des autocuiseurs. Dans l'exemple illustré aux figures, la soupape 5 comprend une tête d'obturation 5A prolongée par une queue 5B guidée à coulissement vertical. La tête 5A est soumise à l'action de rappel d'un ressort 6 qui maintient en permanence la tête 5A plaquée contre la surface du couvercle 2, de façon à ce que la tête 5A obture un orifice 7 ménagé à travers le couvercle 2. Ainsi, sous l'effet de la force de rappel exercée par le ressort 6, la soupape 5 se trouve dans une position étanche dans laquelle elle empêche la vapeur V de s'échapper hors de l'enceinte via l'orifice 7. Dès que la pression au sein de l'enceinte dépasse un niveau prédéterminé, correspondant au niveau de consigne évoqué précédemment, la vapeur V exerce sur la tête 5A une poussée supérieure à la force de rappel exercée par le ressort 6 de sorte que la tête 5A est repoussée hors de contact du couvercle 2, ménageant ainsi un espace de passage pour la vapeur V qui peut alors rejoindre le premier canal 3 et s'échapper ainsi vers l'extérieur.

Dans l'exemple de réalisation illustré aux figures, l'appareil de cuisson comprend ainsi :
- un orifice 7 ménagé à travers le couvercle 2,
- une chambre 8 coiffant de manière étanche l'orifice 7, la tête 5A de la soupape 5 se déplaçant au sein de la chambre 8 entre sa position étanche et sa position de fuite,
- un premier canal 3 d'évacuation de la vapeur V, ledit premier canal 3 comprenant un premier conduit 30 qui s'étend entre d'une part une ouverture d'admission 30A de vapeur connectée à la chambre 8 et d'autre part une ouverture d'éjection 30B de vapeur par laquelle la vapeur V s'échappe hors du premier conduit 30.

Un tel agencement est parfaitement classique et bien connu en tant que tel. Il est cependant complété ici par la mise en oeuvre du deuxième canal 4, qui vient se brancher sur le premier canal 3 pour évacuer les condensats C susceptibles de se former au sein du premier canal 3.

Avantageusement, le premier canal 4 est agencé de façon à ce que les condensats C qui s'échappent par son ouverture d'évacuation 40B ne retournent pas dans la chambre 8, mais soient expulsés (de préférence par gravité) en dehors du circuit emprunté par la vapeur V de l'intérieur de l'enceinte jusqu'à l'ouverture d'éjection de vapeur 30B.

Avantageusement, l'enceinte de cuisson présente une face interne 9 définissant un volume interne d'accueil des aliments et une face externe 10 opposée, le deuxième canal 4 étant orienté de façon à canaliser les condensats C vers la face externe 10, sur cette dernière, comme illustré aux figures.

Plus précisément, dans l'exemple de réalisation illustré aux figures, l'enceinte de cuisson est obtenue par la réunion d'une cuve et d'un couvercle 2, lequel présente une face intérieure 2A destinée à se trouver en regard de la cuve, et une face extérieure 2B opposée. Dans ce cas, le deuxième canal 4 est avantageusement orienté de façon à canaliser les condensats C vers ladite face extérieure 2B, laquelle est conçue pour s'échauffer lors de la cuisson, pour vaporiser les condensats C en provenance du deuxième canal 4 qui entrent en contact avec ladite face extérieure 2B.

Par exemple, le couvercle 2 est réalisé en un matériau métallique bon conducteur de chaleur, de telle sorte que sous l'effet de l'apport thermique utilisé pour la cuisson, le couvercle 2, et plus précisément sa face extérieure 2B, s'échauffe. De cette façon, l'eau condensée expulsée par le deuxième canal 4 sur la face extérieure 2B du couvercle est instantanément vaporisée dans l'atmosphère extérieure au contact de la face extérieure 2B. Ceci constitue une façon particulièrement simple, fiable et économique, d'évacuer les liquides de condensation collectés par le deuxième canal 4, et ce de façon tout à fait invisible pour l'utilisateur.

Comme exposé précédemment, l'enceinte de cuisson comprend de façon avantageuse un orifice 7 de mise en communication de son volume interne d'accueil des aliments avec l'extérieur. L'organe d'échappement 1 comprend quant à lui avantageusement un module, c'est-à-dire un sous-ensemble unitaire, incorporant les premiers et deuxièmes canaux 3, 4, ledit module étant conçu pour être rapporté et fixé sur l'enceinte de cuisson, de préférence sur la face extérieure 2B du couvercle 2, de façon à ce que le premier canal 3 s'abouche à l'orifice 7 de mise en communication, lequel est ménagé à travers le couvercle 2.

En définitive, grâce à l'invention, seule une quantité d'eau très faible est susceptible de stagner dans le circuit d'évacuation de la vapeur (constitué par l'orifice 7, la chambre 8 et le premier conduit 30).

Cette quantité d'eau est trop faible pour être à l'origine de projections brûlantes ou de clapotis désagréables. Le caractère anxiogène du fonctionnement de la soupape 5 en régulation et les risques de brûlures ou de projections associées, dont les conséquences peuvent être dramatiques, sont ainsi très fortement réduits.

Quant à l'évacuation de l'eau condensée par le deuxième canal 4, elle est avantageusement imperceptible pour l'utilisateur car elle se fait sous le module évoqué précédemment, au plus près du couvercle 2, avec vaporisation immédiate de l'eau à l'extérieur sous l'effet de la température élevée du couvercle 2.

Enfin, l'invention présente un coût extrêmement réduit, voire quasi-nul, puisque le deuxième canal 4 peut être intégré de façon précoce dans la conception du moule du module précité.

## Revendications

1. Organe d'échappement de vapeur (1) conçu pour équiper une enceinte de cuisson d'aliments et comprenant un premier canal (3) d'évacuation de la vapeur (V) susceptible d'être produite dans l'enceinte de cuisson, ledit premier canal (3) étant conformé pour que ladite vapeur (V) s'échappe par le premier canal (3) selon une première direction (D1), **caractérisé en ce qu'**il comprend un deuxième canal (4) d'évacuation d'au moins une fraction des condensats (C) susceptibles de se former au sein dudit premier canal (3) par condensation de la vapeur (V) dans ledit premier canal (3), ledit deuxième canal (4) étant connecté au premier canal (3) pour évacuer lesdits condensats (C) selon une deuxième direction (D2) sensiblement différente de la première direction (D1).

2. Organe d'échappement (1) selon la revendication 1 **caractérisé en ce que** le premier canal (3) est orienté de façon à canaliser la vapeur (V) selon une trajectoire sensiblement ascendante.

3. Organe d'échappement (1) selon la revendication 1 ou 2 **caractérisé en ce que** le deuxième canal (4) est orienté de façon à canaliser les condensats (C) selon une trajectoire sensiblement descendante.

4. Organe d'échappement (1) selon l'une des revendications 1 à 3 **caractérisé en ce qu'**il comprend une soupape (5) sensible à la pression régnant dans ladite enceinte de cuisson, ladite soupape (5) étant mobile entre d'une part une position étanche dans laquelle elle empêche sensiblement la vapeur (V) de sortir par le premier canal (3) tant que la pression dans l'enceinte n'excède pas un niveau prédéterminé, et d'autre part au moins une position de fuite dans laquelle elle autorise un échappement de vapeur (V) par le premier canal (3).

5. Organe d'échappement (1) selon la revendication 4 **caractérisé en ce que** ladite soupape (5) est conçue pour réguler la pression régnant dans l'enceinte de cuisson à un niveau de consigne correspondant audit niveau prédéterminé.

6. Organe d'échappement (1) selon l'une des revendications 1 à 5 **caractérisé en ce que** le premier canal (3) comprend au moins un premier conduit (30) qui s'étend entre d'une part une ouverture d'admission (30A) de vapeur par laquelle la vapeur en provenance de l'enceinte de cuisson pénètre dans ledit premier conduit (30) et d'autre part une ouverture d'éjection (30B) de vapeur par laquelle la vapeur s'échappe hors du premier conduit (30).

7. Organe d'échappement (1) selon l'une des revendications 1 à 6 **caractérisé en ce que** le deuxième canal (4) comprend au moins un deuxième conduit (40) qui s'étend entre d'une part une ouverture d'admission (40A) de condensats par laquelle les condensats (C) en provenance du premier conduit (30) pénètrent dans ledit deuxième conduit (40) et d'autre part une ouverture d'évacuation (40B) des condensats par laquelle lesdits condensats (C) s'échappent hors du deuxième conduit (40).

8. Organe d'échappement (1) selon les revendications 6 et 7 **caractérisé en ce que** l'ouverture d'admission (40A) de condensats est connectée au premier conduit (30) entre les ouvertures d'admission (30A) et d'éjection (30B) de vapeur.

9. Organe d'échappement (1) selon la revendication 8 **caractérisé en ce que** la distance séparant l'ouverture d'admission (40A) de condensats de l'ouverture d'admission (30A) de vapeur est sensiblement inférieure à la distance séparant l'ouverture d'admission de condensats (40A) de l'ouverture d'éjection (30B) de vapeur.

10. Organe d'échappement (1) selon l'une des revendications 7 à 9 **caractérisé en ce que** le premier et le deuxième canal (3, 4) sont agencés de façon qu'au moins la portion du premier canal (3) située immédiatement à l'amont, par rapport à la première direction (D1), de l'ouverture d'admission de condensats (40A), surplombe, au moins en partie, ladite ouverture d'admission de condensats (40A).

11. Organe d'échappement (1) selon l'une des revendications 1 à 10 **caractérisé en ce que**, l'enceinte de cuisson présentant une face interne (9) définissant un volume interne d'accueil des aliments et une face externe (10) opposée, le deuxième canal (4) est orienté de façon à canaliser les condensats (C) vers ladite face externe (10).

12. Appareil de cuisson d'aliments comprenant d'une part un organe d'échappement (1) conforme à l'une des revendications précédentes et d'autre part une cuve et un couvercle (2) destiné à être rapporté sur la cuve pour former ladite enceinte de cuisson, ledit organe d'échappement (1) étant monté sur le couvercle (2).

13. Appareil de cuisson selon la revendication 12 **caractérisé en ce que** l'enceinte de cuisson comprend un orifice (7) de mise en communication de son volume interne d'accueil des aliments avec l'extérieur, ledit orifice (7) étant ménagé à travers le couvercle (2).

14. Appareil de cuisson selon la revendication 12 ou 13 **caractérisé en ce que** le couvercle (2) présente une face intérieure (2A) destinée à se trouver en regard de la cuve et une face extérieure (2B) opposée, le deuxième canal (4) étant orienté de façon à canaliser les condensats (C) vers ladite face extérieure (2B), laquelle est conçue pour s'échauffer lors de la cuisson, pour vaporiser les condensats (C) en provenance du deuxième canal (4) qui entrent en contact avec elle.

15. Appareil de cuisson selon l'une des revendications 12 à 14 **caractérisé en ce qu'**il constitue un appareil de cuisson sous pression.

## Patentansprüche

1. Dampfablasselement (1), das dazu vorgesehen ist, für einen Garbehälter von Nahrungsmitteln verwendet zu werden, umfassend einen ersten Kanal (3) zum Ableiten des Dampfes (V), der in dem Garbehäßer erzeugt werden kann, wobei der erste Kanal (3) derart ausgeführt ist, dass der Dampf (V) durch den ersten Kanal (3) in eine erste Richtung (D1) austritt, **dadurch gekennzeichnet, dass** es einen zweiten Kanal (4) zum Ableiten mindestens eines Teils der Kondensate (C) umfasst, die sich innerhalb des ersten Kanals (3) durch Kondensation des Dampfes (V) in dem ersten Kanal (3) bilden können, wobei der zweite Kanal (4) an den ersten Kanal (3) angeschlossen ist, um die Kondensate (C) in eine zweite Richtung (D2), die im Wesentlichen zur ersten Richtung (D1) unterschiedlich ist, abzuleiten.

2. Ablasselement (1) nach Anspruch 1, **dadurch gekennzeichnet, dass** der erste Kanal (3) derart ausgerichtet ist, dass er den Dampf (V) entlang einer im Wesentlichen aufsteigenden Bahn leitet.

3. Ablasselement (1) nach Anspruch 1 oder 2, **dadurch gekennzeichnet, dass** der zweite Kanal (4) derart ausgerichtet ist, dass er die Kondensate (C) entlang einer im Wesentlichen absteigenden Bahn leitet.

4. Ablasselement (1) nach einem der Ansprüche 1 bis 3, **dadurch gekennzeichnet, dass** es ein Ventil (5) umfasst, das für den in dem Garbehälter herrschenden Druck empfindlich ist, wobei das Ventil (5) zwischen einerseits einer dichten Position, in der es im Wesentlichen den Dampf (V) daran hindert, durch den ersten Kanal (3) auszutreten, solange der Druck in dem Behälter nicht ein vorbestimmtes Niveau überschreitet, und andererseits mindestens einer Leckageposition, in der es ein Ablassen des Dampfes (V) durch den ersten Kanal (3) gestattet, beweglich ist.

5. Ablasselement (1) nach Anspruch 4, **dadurch gekennzeichnet, dass** das Ventil (5) derart ausgeführt ist, dass es den Druck, der in dem Garbehälter herrscht, auf ein Sollniveau entsprechend dem vorbestimmten Niveau reguliert.

6. Ablasselement (1) nach einem der Ansprüche 1 bis 5, **dadurch gekennzeichnet, dass** der erste Kanal (3) mindestens eine erste Leitung (30) umfasst, die sich zwischen einerseits einer Dampfeinlassöffnung (30A), durch die der von dem Garbehälter kommende Dampf in die erste Leitung (30) eindringt, und andererseits einer Dampfauslassöffnung (30B) erstreckt, durch die der Dampf aus der ersten Leitung (30) austritt.

7. Ablasselement (1) nach einem der Ansprüche 1 bis 6, **dadurch gekennzeichnet, dass** der zweite Kanal (4) mindestens eine zweite Leitung (40) umfasst, die sich zwischen einerseits einer Kondensateinlassöffnung (40A), durch die die von der ersten Leitung (30) kommenden Kondensate (C) in die zweite Leitung (40) eindringen, und andererseits einer Kondensatauslassöffnung (40B), durch die die Kondensate (C) aus der zweiten Leitung (40) austreten, erstreckt.

8. Ablasselement (1) nach den Ansprüchen 6 und 7, **dadurch gekennzeichnet, dass** die Kondensateinlassöffnung (40A) an die erste Leitung (30) zwischen den Dampfeinlass- (30A) und -auslassöffnungen (30B) angeschlossen ist.

9. Ablasselement (1) nach Anspruch 8, **dadurch gekennzeichnet, dass** der Abstand zwischen der Kondensateinlassöffnung (40A) und der Dampfeinlassöffnung (30A) im Wesentlichen geringer als der Abstand zwischen der Kondensateinlassöffnung (40A) und der Dampfauslassöffnung (30B) ist.

10. Ablasselement (1) nach einem der Ansprüche 7 bis 9, **dadurch gekennzeichnet, dass** der erste und der zweite Kanal (3, 4) derart angeordnet sind, dass zumindest der Abschnitt des ersten Kanals (3), der sich unmittelbar stromaufwärts in Bezug zur ersten Richtung (D1) der Kondensateinlassöffnung (40A) befindet, zumindest teilweise die Kondensateinlassöffnung (40A) überragt.

11. Ablasselement (1) nach einem der Ansprüche 1 bis 10, **dadurch gekennzeichnet, dass** der Garbehälter eine Innenseite (9), die ein Innenvolumen für die Aufnahme der Nahrungsmittel definiert, und eine gegenüberliegende Außenseite (10) aufweist, wobei der zweite Kanal (4) derart ausgerichtet ist, dass er die Kondensate (C) zu der Außenseite (10) leitet.

12. Gargerät für Nahrungsmittel, umfassend einerseits ein Ablasselement (1) nach einem der vorhergehenden Ansprüche und andererseits eine Wanne und einen Deckel (2), der dazu bestimmt ist, auf die Wanne aufgesetzt zu werden, um den Garbehälter zu bilden, wobei das Ablasselement (1) auf dem Deckel (2) montiert ist.

13. Gargerät nach Anspruch 12, **dadurch gekennzeichnet, dass** der Garbehälter eine Öffnung (7) zur Verbindung seines Innenvolumens für die Aufnahme der Nahrungsmittel mit außen umfasst, wobei die Öffnung (7) durch den Deckel (2) hindurchgeht.

14. Gargerät nach Anspruch 12 oder 13, **dadurch gekennzeichnet, dass** der Deckel (2) eine Innenseite (2A), die dazu bestimmt ist, gegenüber der Wanne angeordnet zu sein, und eine gegenüberliegende Außenseite (2B) umfasst, wobei der zweite Kanal (4) derart ausgerichtet ist, dass er die Kondensate (C) zu der Außenseite (2B) leitet, die derart ausgeführt ist, dass sie sich beim Garen erhitzt, um die Kondensate (C), die vom zweiten Kanal (4) kommen und mit ihr in Kontakt treten, zu verdampfen.

15. Gargerät nach einem der Ansprüche 12 bis 14, **dadurch gekennzeichnet, dass** es ein Druckgargerät darstellt.

## Claims

1. A steam release member (1) designed to equip a food-cooking enclosure and including a first removal channel (3) for removing any steam (V) generated in the cooking enclosure, said first channel (3) being shaped so that said steam (V) is released via the first channel (3) in a first direction (D1), said steam release member being **characterized in that** it includes a second removal channel (4) for removing at least a fraction of any condensate (C) formed inside said first channel (3) by the steam (V) condensing in said first channel (3), said second channel (4) being connected to the first channel (3) for the purpose of removing said condensate (C) in a second direction (D2) that is significantly different from the first direction (D1).

2. A release member (1) according to claim 1, **characterized in that** the first channel (3) is angularly positioned in such a manner as to channel the steam (V) in a substantially upward path.

3. A release member (1) according to claim 1 or claim 2, **characterized in that** the second channel (4) is angularly positioned in such a manner as to channel the condensate (C) in a substantially downward path.

4. A release member (1) according to any one of claims 1 to 3, **characterized in that** it includes a valve member (5) that is sensitive to the pressure prevailing in said cooking enclosure, said valve member (5) being mounted to move between firstly a pressure-tight position in which it substantially prevents the steam (V) from exiting via the first channel (3) so long as the pressure in the enclosure does not exceed a predetermined level, and secondly at least one leakage position in which it allows steam (V) to be released via the first channel (3);

5. A release member (1) according to claim 4, **characterized in that** said valve member (5) is designed to regulate the pressure prevailing in the cooking enclosure to a setpoint level corresponding to said predetermined level.

6. A release member (1) according to any one of claims 1 to 5, **characterized in that** the first channel (3) comprises at least one first duct (30) that extends between firstly a steam admission opening (30A) via which the steam coming from the cooking enclosure penetrates into said first duct (30) and secondly a steam discharge opening (30B) via which the steam is released out of the first duct (30).

7. A release member (1) according to any one of claims 1 to 6, **characterized in that** the second channel (4) comprises at least one second duct (40) that extends between firstly a condensate admission opening (40A) via which the condensate (C) coming from the first duct (30) penetrates into said second duct (40), and secondly a condensate removal opening (40B) via which said condensate (C) is released out of the second duct (40).

8. A release member (1) according to claims 6 and 7, **characterized in that** the condensate admission opening (40A) is connected to the first duct (30) between the steam admission opening (30A) and the steam discharge opening (30B).

9. A release member (1) according to claim 8, **characterized in that** the distance between the condensate admission opening (40A) and the steam admission opening (30A) is significantly less than the distance between the condensate admission opening (40A) and the steam discharge opening (30B).

10. A release member (1) according to any one of claims 7 to 9, **characterized in that** the first and second channels (3, 4) are arranged in such a manner that at least the portion of the first channel (3) that is situated immediately upstream, relative to the first direction (D1), from the condensate admission opening (40A), overlies, at least in part, said condensate admission opening (40A).

11. A release member (1) according to any one of claims 1 to 10, **characterized in that**, with the cooking enclosure having an inside face (9) defining an internal volume for receiving food, and an outside face (10) that faces the opposite way, the second channel (4) is angularly positioned in such a manner as to channel the condensate (C) towards said outside face (10).

12. A food-cooking utensil comprising firstly a release member (1) according to any preceding claim and secondly a vessel and a lid (2) designed to be placed on the vessel to form said cooking enclosure, said release member (1) being mounted on the lid (2).

13. A cooking utensil according to claim 12, **characterized in that** the cooking enclosure is provided with an orifice (7) for putting its internal volume for receiving food into communication with the outside, said orifice (7) being provided through the lid (2).

14. A cooking utensil according to claim 12 or 13, **characterized in that** the lid (2) has an inside face (2A) designed to be situated facing the vessel, and an outside face (28) that faces the opposite way, the second channel (4) being angularly positioned in such a manner as to channel the condensate (C) towards said outside face (2B), which face is designed to heat up during cooking, so as to evaporate the condensate (C) coming from the second channel (4) that comes into contact with it.

15. A cooking utensil according to any one of claims 12 to 14, **characterized in that** it constitutes a pressure-cooking utensil.
